(19) **Europäisches Patentamt European Patent Office Office européen des brevets**

(11) **EP 4 012 653 B1**

(12) **EUROPEAN PATENT SPECIFICATION**

(45) Date of publication and mention of the grant of the patent:
**15.07.2026 Bulletin 2026/29**

(21) Application number: **20212900.3**

(22) Date of filing: **09.12.2020**

(51) International Patent Classification (IPC):
*G06T 7/579* (2017.01)

(52) Cooperative Patent Classification (CPC):
**G06T 7/579;** G06T 2207/10016; G06T 2207/20084; G06T 2207/30244; G06T 2207/30252

(54) **DEPTH-MAP PREDICTION METHOD; COMPUTER PROGRAM, READABLE MEDIUM, SYSTEM AND MOBILE MACHINE FOR IMPLEMENTING THE METHOD**

TIEFENABBILDUNGSVORHERSAGEVERFAHREN, COMPUTERPROGRAMM, LESBARES MEDIUM, SYSTEM UND MOBILE MASCHINE ZUR IMPLEMENTIERUNG DES VERFAHRENS

PROCÉDÉ DE PRÉDICTION DE CARTE DE PROFONDEUR, PROGRAMME INFORMATIQUE, SUPPORT LISIBLE, SYSTÈME ET MACHINE MOBILE POUR LA MISE EN ŒUVRE DU PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.06.2022 Bulletin 2022/24**

(73) Proprietors:
• **TOYOTA JIDOSHA KABUSHIKI KAISHA Aichi-ken, 471-8571 (JP)**
• **Katholieke Universiteit Leuven 3000 Leuven (BE)**

(72) Inventors:
• **ABBELOOS, Wim 1140 Brussels (BE)**
• **KUZNIETSOV, Yevhen 3000 Leuven (BE)**
• **PROESMANS, Marc 3000 Leuven (BE)**
• **VAN GOOL, Luc 3000 Leuven (BE)**

(74) Representative: **Cabinet Beau de Loménie 103, rue de Grenelle 75340 Paris Cedex 07 (FR)**

(56) References cited:
**US-A1- 2012 163 672 US-A1- 2020 211 206**

• **KUMAR ARAN CS ET AL: "Monocular Depth Prediction Using Generative Adversarial Networks", 2018 IEEE/CVF CONFERENCE ON COMPUTER VISION AND PATTERN RECOGNITION WORKSHOPS (CVPRW), IEEE, 18 June 2018 (2018-06-18), pages 413 - 4138, XP033475665, DOI: 10.1109/CVPRW.2018.00068**
• **YANG DELONG ET AL: "Unsupervised framework for depth estimation and camera motion prediction from video", NEUROCOMPUTING, ELSEVIER, AMSTERDAM, NL, vol. 385, 19 December 2019 (2019-12-19), pages 169 - 185, XP086067819, ISSN: 0925-2312, [retrieved on 20191219], DOI: 10.1016/ J.NEUCOM.2019.12.049**

EP 4 012 653 B1

## Description

FIELD OF THE DISCLOSURE

The present disclosure concerns the production of depth maps and camera motion estimates based on video sequences.

BACKGROUND OF THE DISCLOSURE

In the course of the development of advanced driver assistance systems (ADAS) and autonomous driving systems, a variety of systems have been developed to estimate depth maps in front of the vehicle, and/or to determine the motion of the vehicle. Such systems are for instance disclosed by the following publications:

- A. C. Kumar, S. M. Bhandarkar and M. Prasad, "Monocular Depth Prediction Using Generative Adversarial Networks," 2018 IEEE/CVF Conference on Computer Vision and Pattern Recognition Workshops (CVPRW), 2018, pp. 413-4138, doi: 10.1109/CVPRW.2018.00068.
- Yang, Delong & Zhong, Xunyu & Gu, Dongbing & Peng, Xiafu & Hu, Huosheng. (2019). "Unsupervised framework for depth estimation and camera motion prediction from video". Neurocomputing. 385. 10.1016/j.neucom.2019.12.049.

A depth map is hereinafter a matrix (which is a kind of digital image), usually associated with an image of a scene acquired by a camera, wherein each element of the matrix corresponds to a pixel of the acquired image and has a value which represents the distance between the camera and the point of the scene shown by the corresponding pixel of the image.

Some of the afore-mentioned ADAS and autonomous driving systems are capable of calculating such depth maps and/or motions of the vehicle merely on the basis of images acquired by a single camera. Managing to implement such function simply on the basis of the images of a single camera is particularly advantageous, since it reduces a lot the complexity and the cost of the sensors required to implement such functions. The cost reduction is particularly clear in comparison with other systems which require the input either of a plurality of cameras, or even of a lidar.

However, it has appeared that the depth maps and/or of the motion of the vehicle, that are predicted by existing prediction systems, are not always very accurate and reliable.

For this reason, there is a need for methods and systems for predicting depth maps and/or of the motion of a vehicle, which would have a higher accuracy and reliability than the existing systems and methods.

The references below disclose several systems and methods that have been developed in the field of depth- or camera motion- estimation, or in the broad field of machine-learning.

References:

[1] Clement Godard, Mac Aodha Oisin, Michael Firman, and Gabriel J. Brostow: "Digging into self-supervised monocular depth estimation", IEEE International Conference on Computer Vision (ICCV), October 2019.
[2] Tinghui Zhou, Matthew Brown, Noah Snavely, and David G.Lowe: "Unsupervised learning of depth and ego-motion from video", Proceedings of the IEEE Conference on Computer Vision and Pattern Recognition, pages 1851-1858, 2017.
[3] Olaf Ronneberger, Philipp Fischer et Thomas Brox: "U-net: Convolutional networks for biomedical image segmentation", International Conference on Medical image computing and computer-assisted intervention. Springer, Cham, 2015.
[4] Vincent Casser, Soeren Pirk, Reza Mahjourian, and Anelia Angelova: "Depth prediction without the sensors: Leveraging structure for unsupervised learning from monocular videos", Proceedings of the AAAI Conference on Artificial Intelligence, volume 33, pages 8001-8008, 2019.
[5] Yuhua Chen, Cordelia Schmid, and Cristian Sminchisescu: "Self-supervised learning with geometric constraints in monocular video: Connecting flow, depth, and camera", IEEE International Conference on Computer Vision (ICCV), October 2019.
[6] Glenn Jocher: YOLOV5 object detector. Code repository: https://github.com/ultralytics/yolov5, or Alexey Bochkovskiy, Chien-Yao Wang, and Hong-Yuan Mark Liao. YOLOv4: Optimal speed and accuracy of object detection", arXiv preprint arXiv:2004.10934, 2020.
[7] Clément Godard, Oisin Mac Aodha, and Gabriel J Brostow: "Unsupervised monocular depth estimation with left-right consistency", Proceedings of the IEEE Conference on Computer Vision and Pattern Recognition, pages 270-279, 2017.

[8] Shunkai Li, Xin Wang, Yingdian Cao, Fei Xue, Zike Yan, and Hongbin Zha. "Self-supervised deep visual odometry with online adaptation", Proceedings of the IEEE/CVF Conference on Computer Vision and Pattern Recognition, pages 6339-6348, 2020.

[9] Zhenyu Zhang, Stephane Lathuiliere, Elisa Ricci, Nicu Sebe, Yan Yan, and Jian Yang. "Online depth learning against forgetting in monocular videos", Proceedings of the IEEE/CVF Conference on Computer Vision and Pattern Recognition, pages 4494-4503, 2020.

[10] NARAYANA, Manjunath, HANSON, Allen, et LEARNED-MILLER, Erik. "Coherent motion segmentation in moving camera videos using optical flow orientations", Proceedings of the IEEE International Conference on Computer Vision. 2013. p. 1577-1584

DISCLOSURE OF THE INVENTION

In order to address the above-described problems of existing depth prediction methods, the computer-implemented depth prediction method for unsupervised monocular depth estimation as defined in claim 1 is proposed.

In the above definition, acquiring an image from a camera means acquiring an image, based on a raw image outputted by the camera. Acquiring the image from the camera may imply applying a pre-processing to the raw image (resizing, cropping, changing contrast, etc., and/or very broadly any pre-processing that can be applied to an image), and then inputting the pre-processed raw image as the image acquired from the camera.

Acquiring a datum means obtaining the datum from a source of information, e.g. from a memory storage or the like, internal or external.

In some embodiments, during said camera motion calculation or acquisition step S52, the camera motion is calculated using a camera motion estimator which is a trainable model, based on the sample image and the additional image; and the method comprises, at said parameters adjustment step S60, further adjusting parameters of the camera motion estimator.

The trainable model can be for instance a neural network, or more broadly any computer-implemented model which can be trained by machine-learning.

In the prediction method:

in step 51, a plurality of depth maps at different resolutions are generated for the sample image of the considered sample, with the depth estimator;

in step S53, reconstructed view for the sample image, based on the additional image are generated for each additional image and for each depth map of said plurality of depth maps;

in step S55, a value of the loss function for the considered sample is calculated for each depth map of said plurality of depth maps; and

in step S60, the parameters of at least of the depth estimator are adjusted based on the respective values of the loss function calculated for the respective samples and for each depth map of said plurality of depth maps.

Advantageously, using a plurality of depth maps to calculate the depth maps and consequently, to calculate the reconstructed views, the loss function, and hence the adaptations of the parameters at step S60, makes it possible to increase the performance of the adjustment operation, during the adaptation iterations.

In some embodiments, the velocity of the camera is used to obtain a scale of the scene, so as to output a depth map having a proper (correct) scale. The velocity is the velocity of a mobile machine on which the camera is mounted. It can be acquired by a velocity meter or by any appropriate means.

The loss function includes a velocity supervision term that penalizes difference(s) between a motion of the camera calculated at step S55 and an actual motion of the camera (relative to the scene in which it is moving) between the sample time point and the at least one additional time point of the considered sample. The afore-mentioned differences are preferably calculated between a magnitude of the calculated motion of the camera and a magnitude of an actual motion of the camera. The actual motion of the camera is a motion of the camera determined based on information other than the motion calculated at step S55, for instance information outputted by a motion sensor, e.g. an inertial measurement unit (IMU), a velocity meter, or a GPS.

Using a velocity term can be useful to improve the adjustment of the depth estimator weights at step S60, whether or not a camera motion estimator is also adjusted at step S60.

When depth maps at different resolutions are calculated at step S52, for a considered sample, preferably a velocity term is calculated for each of these depth maps (and for each additional image of the sample).

The velocity supervision term is calculated as:

$$L_{vel} = \sum_k | D_{s,k} - \Delta t_{s,k} V_{s,k} |$$

where

$D_{s,k}$ is the distance (calculated based on the camera motion Ms,k outputted by the camera motion estimator) travelled by the camera between the sample time point ts and the time point tk

$\Delta t_{s,k}$ is the time difference between the sample time point ts and the time point tk, and

$V_{s,k}$ is the velocity (or speed) of the camera relative to the scene between time ts and tk.

In some embodiments, the value of said loss function is calculated so as not to take into account, in the sample image, pixels representing a moving object identified in the scene. For instance, the value of the loss function is calculated only on the basis of pixels located in regions not corresponding to moving objects.

When depth maps at different resolutions are calculated at step S52, the above summation for calculating Lvel is of course calculated for each of these depth maps (as well as for each additional image Ik of the sample).

The image reconstruction term of the loss function is expressed as:

$$Lrec = \mu * Lpix,$$

where Lpix is a per-pixel photoconsistency error between the sample image and said at least one reconstructed view generated based on said at least one additional time points (tk), and $\mu$ is a per-pixel mask, in particular a mask $\mu$_auto configured to mask out pixels of the image which represent points of the scene whose motion is equal or substantially equal to the motion of the camera relative to the scene.

The per-pixel photoconsistency error Lpix is a minimum reprojection error calculated as follows:

$$L_{pix} = \min_k Lp_{s,k} (I_s, R_{s,k})$$

where

$I_s$ is the sample image,

$R_{s,k}$ is the reconstructed view Rs,k for the sample image Is, based on an additional image Ik, and

$Lp_{s,k}$ is a per-pixel minimum photoconsistency error between the image Is and the reconstructed view Rs,k.

In the above expression, the above minimum is calculated as a minimum over the different additional images Ik.

In addition, when depth maps at different resolutions are calculated at step S52, the above minimum is of course calculated for each of these depth maps.

In some embodiments, the depth estimator and/or the camera motion estimator comprises a U-net.

The proposed method is a method to iteratively predict a depth map, typically during normal operation of a mobile machine on which the camera is mounted. Consequently, it is not a training method; it is an operational method, to be used for obtaining successive depth maps values on the machine on which the camera is mounted. For instance, the camera may be mounted on a vehicle or a robot, and the method is carried out to obtain successive depth maps of the environment of the vehicle or robot, while the vehicle or robot is moving. The method can be used to obtain depth maps while a vehicle is moving on a road, in order to perform partial or fully automated driving.

In other words, by contrast with many known methods, in the proposed method the depth estimator (and possibly the camera motion estimator) is(are) trained on the fly (preferably, continuously) while the method is carried out, so as to ensure that the depth- (and camera motion-) estimator(s) keeps at all times the highest level of performance and reliability.

Advantageously, in the proposed method, during the adaptation iterations, one or more past samples is used to train the depth estimator, in addition to the current sample. Accordingly, the experience from the past stored in previously acquired images is leveraged by using said past sample(s). It has been observed indeed that using the past samples for training the depth estimator, and the camera motion estimator in embodiments which comprise a neural-network-based camera motion estimator, effectively mitigates the consequences of overfitting and thus stabilizes the training of the depth estimator and (as the case may be) the camera motion estimator.

Although the above-defined method only mentions executing at least in one adaptation iteration, in order to train (at least) the depth estimator, it is preferable to perform adaptation iterations repeatedly. Therefore, in the above method, the adaptation iterations are preferably carried out multiple times; for instance, at each iteration. The adaptation iterations can also be triggered based on some event; for instance when it is detected that the accuracy of the depth detector has fallen below a minimum threshold.

In the method, a sample preferably comprises exactly two additional images: It has been observed indeed that this offers a good performance/computation time ratio.

Preferably, the additional images can be selected so that the sample image and the additional images form a sequence of images consecutively acquired from the camera.

In this case, in the case where moreover the samples include exactly two additional images, preferably in the samples of an adaptation iteration, the sample image is the image acquired at the intermediate time point, that is, one of the two additional images is the image acquired immediately before the sample image, and the other additional image is the image acquired immediately after the sample image.

In a particular implementation, the proposed method is determined by computer program instructions.

Accordingly, another purpose the present disclosure is to propose one or more computer program(s) comprising instructions which, when the instructions are executed by a computer, cause the computer to carry out the steps of one of the afore-mentioned methods, in accordance with the present disclosure. The computer program(s) may use any programming language, and be in the form of source code, object code, or code intermediate between source code and object code, such as in a partially compiled form, or in any other desirable form. The computer may be any data processing means, for instance one or more personal computer(s), one or more processors, one or more remote servers, etc. It can be made up of a single machine or a plurality of machines, for instance spread over different locations.

The present disclosure also includes a non-transitory computer readable medium, having the above-defined one or more computer program(s) stored thereon. The computer-readable medium may be an entity or device capable of storing the program. For example, the computer-readable medium may comprise storage means, such as a read only memory (ROM), e.g. a compact disk (CD) ROM, or a microelectronic circuit ROM, or indeed magnetic recording means, e.g. a floppy disk or a hard disk.

The present disclosure also includes a computer-implemented prediction system for iteratively predicting a depth map using at least a depth estimator, the depth estimator being a neural network; the prediction system comprising one or more processors and a computer-readable medium; the computer-readable medium comprising computer instructions stored therein, wherein the instructions, when executed by the one or more processors, cause the one or more processors to carry out the steps of one of the above-defined prediction methods.

The present disclosure can for instance be implemented in a mobile machine, such as a vehicle or a robot (including a drone), comprising a camera and the above-defined computer-implemented prediction system, the computer-implemented prediction system being configured to acquire images from the camera.

BRIEF DESCRIPTION OF THE DRAWINGS

The present invention may be better understood and its numerous other objects and advantages will become apparent to those skilled in the art by reference to the accompanying drawing wherein like reference numerals refer to like elements in the several figures and in which:

Fig.1 is a schematic view of a vehicle on which a prediction system according to the present disclosure is mounted;
Fig.2 is an exemplary image inputted by the system of Fig.1 to predict a depth map;
Fig.3 is an exemplary depth map outputted by the system of Fig.1 after inputting the image of Fig.2;
Fig.4 is a schematic view of the depth estimator of the prediction system shown on Figure 1;
Fig.5 is a schematic view of the camera motion estimator of the prediction system shown on Figure 1;
Fig.6 is a bloc diagram illustrating the steps of a depth- (and camera motion-) prediction method according to the present disclosure;
Fig.7 is a schematic view illustrating the exchanges of data when a depth and/or camera motion prediction method according to the present disclosure is performed.

DESCRIPTION OF PREFERRED EMBODIMENTS

Embodiments of methods and systems according to the present disclosure will now be presented.

They will be presented in the case where the images are acquired by camera(s) mounted on a car (as an example of a mobile machine, such as a vehicle or a robot). It should be understood that the present disclosure can be applied to many types of mobile machines on a camera can be mounted. The mobile machine can be a road, aerial, or marine vehicle, manned or unmanned; it can also be a mobile robot.

Material architecture

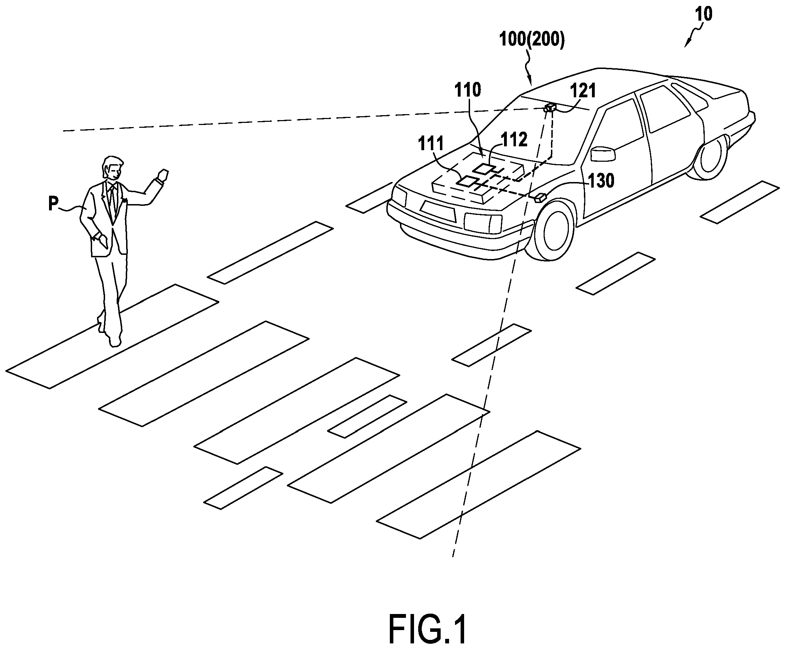

A car 10 (an example of a mobile machine, which can be a vehicle, but also a robot if the car is a fully autonomous, unmanned vehicle) on which a prediction system 200 according to the present disclosure is mounted will now be presented in relation with Fig.1.

On Fig.1, car 10 is represented on a road, in front of a pedestrian crossing on which a pedestrian P is crossing the road.

Car 10 includes an automated driving system 100. The automated driving system 100 ('system 100') can be an advanced driving assistance system (ADAS), or a fully autonomous driving system capable of handling alone all driving tasks, at least in certain operational design domains. That is, driving system 100 can be configured to provide any level of automation, i.e. it can be ranked from any level from 1 to 5 according to norm SAE J3016 (201806).

System 100 comprises a central driving computer 110, a set of sensors, each sensor being connected to computer 110, and various other components.

Most components of system 100 are shared components, which are used to perform multiple tasks. That is, the components of the vehicle driving system 100 perform the functions of system 100, but may also perform other functions in vehicle 1. System 100 includes in particular the above-mentioned computer-implemented prediction system 200 ('system 200') according to the present disclosure, which is implemented by the central driving computer 110 ('computer 110').

Although computer 110 is represented on Fig.1 in a single box, it may comprise one or more processors, and can therefore be a distributed calculation system, distributed over a plurality of processors, possibly physically arranged on different locations.

The set of sensors comprises in particular sensors configured to perceive an external environment of car 1. In this purpose, it comprises several cameras 120. Only one of these cameras 120, the front camera 121, is represented on Fig.1. The cameras 120 also comprises lateral cameras and a back camera, as know per se, which are not represented on Fig.1. Cameras 120 are configured to acquire images of the environment of car 1, on 360° around it, at successive time steps.

The set of sensors further comprises a velocity-meter 130, which measures the speed of the car and transmits the acquired values of the speed to computer 110.

The functions (the functional units) of system 100 are implemented on the computer 110.

Computer 110 comprises a non-transitory storage medium 111 and one or more processor(s) 112.

The computer 110, in particular in its storage medium 111, stores instructions which when executed by the one or more processor(s) 112 cause the one or more processor(s) 112 to implement the different functional units or functions of system 100.

The one or more processors 112 are intended to be representative of the presence of any one or more processors or processing devices, of any of a variety of forms.

A computer program to perform driver assistance tasks and/or driving tasks, configured in particular to predict the depth and the camera motion according to the present disclosure, is stored in storage medium 111. This program, and the storage medium 111, are examples respectively of a computer program and a computer-readable recording medium pursuant to the present disclosure.

The memory 103 of the computer 110 indeed constitutes a recording medium according to the invention, readable by the one or more processor(s) 112 and on which said program is recorded.

The core units of the prediction system: The depth estimator and the camera motion estimator

The prediction system 200, or 'system 200', is configured to predict depth maps in front of car 10 at successive time points ti (ti = t0, t1, ... tn, where ti are successive time points, which correspond to successive acquisitions of camera 121). The system 200 can also calculate the motion of the camera, at each of these time points.

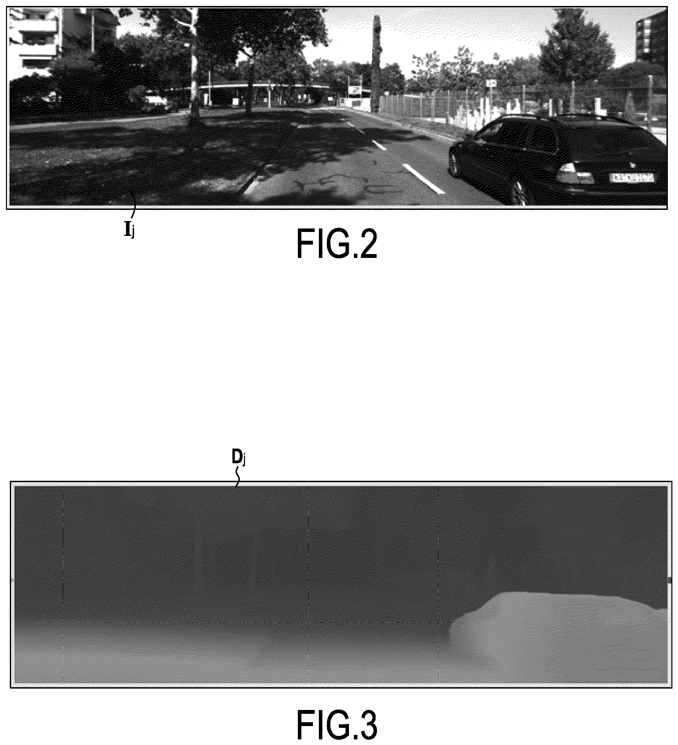

These functions are realized by acquiring an image outputted by camera 121 at each of these time points. This image outputted by the camera indeed is transmitted at each time step in real time to system 200. Fig.2 shows an exemplary image Ij, acquired at a time point tj.

Based on the image Ij acquired at time point tj, system 200 outputs a depth map Dj, as shown on Fig.3. In the depth map Dj, the lighter the colour of a pixel, the closer the point represented by the pixel, relative to the camera.

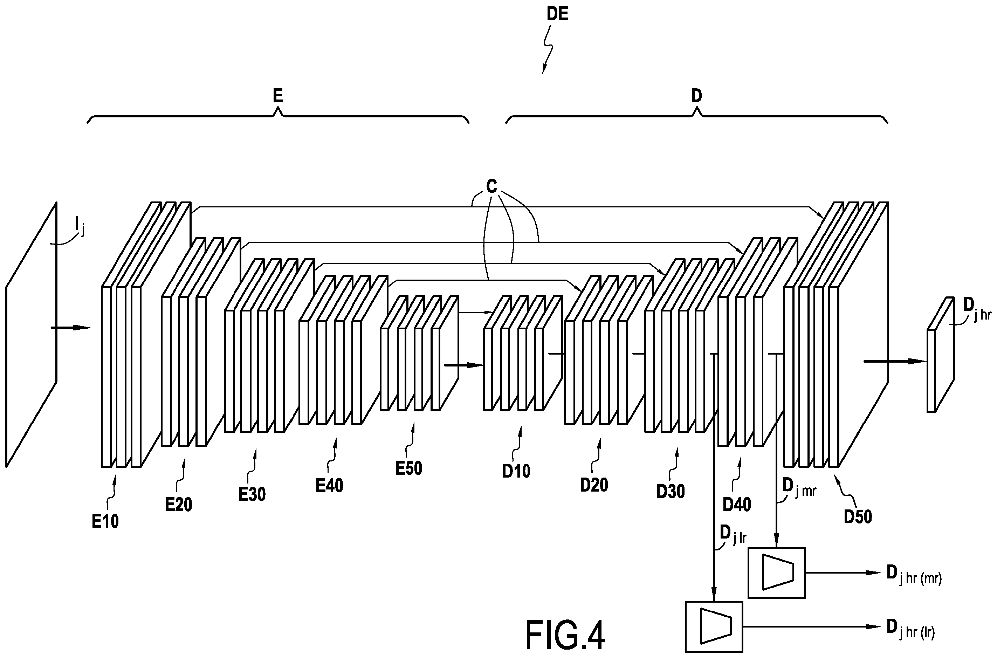

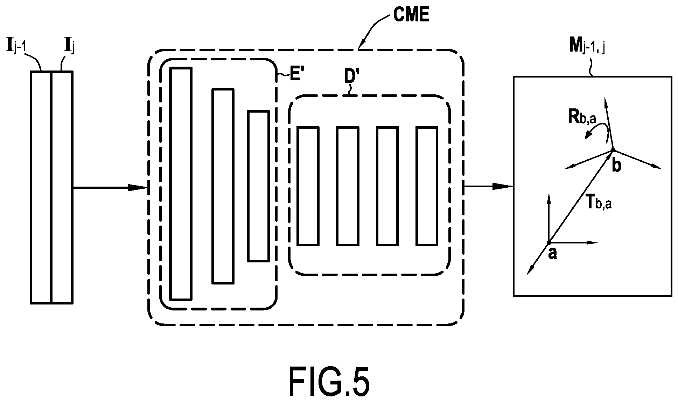

In order to predict the depth maps (and, in the present embodiment, the camera motion), system 200 comprises two main, machine-learning based functional units: a depth estimator DE, illustrated by Fig.4, and a camera motion estimator CME, illustrated by Fig.5. Both estimators are neural networks.

Exemplary architectures of the depth- and the camera motion- estimators will now be presented in relation with Figs.4 and 5.

Importantly and advantageously, the method of the present disclosure is model-agnostic. That is, although exemplary architectures are presented below for the depth- and camera motion- estimators, the method of the present disclosure can be applied to other architectures as well.

The depth estimator DE is configured to output depth maps Di at the successive time points ti.

In some embodiments, the depth map estimator may be configured to calculate a depth map at multiple scales.

In these embodiments, as in the exemplary embodiment presented herein, on the basis of an initial image (Ij), the depth estimator DE is configured to output depth maps at multiple resolutions. In order to exploit these different depth maps, those of these depth maps whose resolution is lower than that of the initial image are re-sized in order to have the resolution thereof.

The depth estimator DE is an encoder-decoder which comprises successively an encoder E and a decoder D.

In an exemplary implementation described here, the depth estimator DE is a U-net type encoder-decoder. A U-net network is a self-encoder network that specifically includes C connections that directly connect the blocks of encoder E to the blocks of decoder D. Generally, a block at position p is connected to a block at position n-p, where n is the total number of blocks. The architecture of a U-net network is presented for instance in reference [3].

The depth estimator DE can be for instance the depth estimator proposed by reference [1].

The encoder E has several successive convolutional blocks E10, E20, E30, E40 and E50 (generally, 3 to 5 convolutional blocks). It may be for instance a ResNet, in particular a ResNet18.

Similar to encoder E, decoder D also includes several successive convolutional blocks D10, D20, D30, D40 and D50.

Naturally, to implement the depth estimator, other architectures than the U-net type network DE of Fig.4 can be used while remaining within the scope of the present disclosure.

As an input, encoder E receives at an iteration or loop of index i an input image Ij, for the loop i=j. This image is processed by encoder E; the output of encoder E is transmitted to the decoder D, which processes this datum and outputs a depth map Dj.

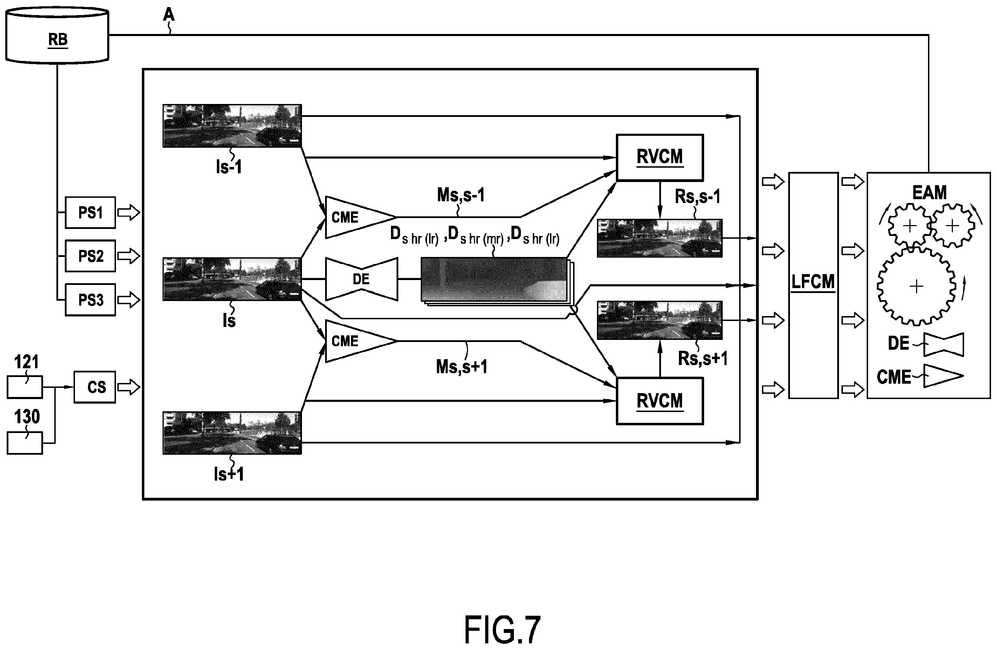

In the present embodiment, on the basis of the initial image Ij, the depth estimator DE is configured to output depth maps at multiple resolutions. For this reason, the main depth map Dj outputted by layer D50 on Fig.7 is noted Dj hr. This depth map is outputted at 'high resolution', that is, at the same resolution as the inputted image Ij.

In addition to this high resolution depth map Dj (or Dj hr), the last two layers D30 and D40 are also configured so as to further output lower resolution depth maps, which have a resolution lower than that of depth map Dj hr: The output of layer D30 is a 'low resolution' depth map Dj lr, and the output of layer D40 is a 'medium resolution' depth map Dj mr.

More precisely, in each direction (width-, height-), the resolution of the medium resolution depth map Dj mr is a half of that of the high resolution depth map Dj hr; and in each direction, the resolution of the low resolution depth map Dj lr is a quarter of that of the high resolution depth map Dj hr.

The resolution of each of these low resolution depth maps is increased by bilinear interpolation, to obtain two additional high resolution depth maps noted respectively Dj hr(mr) and Dj hr(lr), which have the same resolution ('high resolution') as the initial image Ij.

The three high resolution depth-maps Dj hr, Dj hr(mr) and Dj hr(lr) obtained in this manner will be used for calculating the loss function, as described below.

Considering now the camera motion estimation, the camera motion estimator CME is configured to output estimates of a motion of camera 121 between two frames or images acquired from camera 121.

More precisely, based on a pair of images Is and Ik, the camera motion estimator CME is configured to predict a camera motion Ms,k between these two images Is and Ik.

Exemplary architectures of the camera motion- estimator will now be presented in relation with Fig.5.

The camera motion estimator CME is a neural network configured to predict a camera motion Ms,k between a first image Is, acquired at a time point ts, and a second image Ik, acquired at a time point tk.

In the example illustrated by Fig.5, the two images Is and Ik are two successive images Ij-1 and Ij successively acquired by camera 121. However, the two images Is and Ik of course do not have to be acquired successively, in two immediately successive acquisition steps. Nevertheless, for the camera motion to be correctly predicted, it is preferable that a substantial portion of each of the two images Is and Ik processed by the camera motion estimator CME represent the same part of the scene, and that the translation and/or rotation of the camera between the two images not be too large.

As shown on Fig.5, the camera motion estimator CME comprises an encoder E', and a decoder D'.

The encoder E' is essentially constituted by a ResNet. Downstream, a series of convolutional layers form a pose-decoder D'. These layers perform downsampling functions, so as to progressively reduce the lateral resolution of the data. Finally, the most downstream layer of the pose-decoder D' predicts the camera motion Ms,k between a pair of images Is and Ik that has been inputted to the encoder E'. The camera motion Ms,k includes information on the translation $T_{a,b}$ of the camera between the locations a and b of the camera respectively at time points ts and tk, and on the rotation $R_{a,b}$ of the camera between time points ts and tk.

The camera motion estimator CME can for instance comprise a ResNet18, modified to accept a pair of color images (or six channels) as input.

An example of a camera motion architecture, which can be used for the camera motion estimator, is for instance disclosed by reference [2].

Preferably, each of the depth- and camera-motion estimators is pre-trained, for instance, based on the methods described in the above-mentioned references.

The loss function L

A major feature of a prediction system or method according to the present disclosure is the loss function L used to train the depth- (and as the case may be, the camera motion-) estimator(s).

As mentioned before, when the prediction system is operated and executes iteratively a method according to the present disclosure, the depth- and the camera motion- estimators are preferably continuously trained. At least, they are trained at least at each training step(s).

During an adaptation iteration, the depth estimator and the camera motion estimator are trained jointly, using a single loss function L. Although they are trained jointly, in operation the depth estimator and the camera motion estimator can be used independently.

In the embodiments in which the depth estimator is configured to output depth maps at different scales, the loss function is calculated for each of these scales.

In the present embodiments, where three depth maps are outputted at three different resolutions (low resolution, medium resolution and high resolution), the loss function is therefore be calculated separately for each of these resolutions. That is, at the iteration $i=j$, the value of the loss function will be calculated for each of the three high resolution depth-maps $Dj\ hr$, $Dj\ hr(mr)$ and $Dj\ hr(lr)$. In the embodiments presented here, the loss function L comprises three terms Lrec, Lsm and Lvel, and is defined by the equation:

$$L = Lrec + \gamma\ Lsm + \lambda\ Lvel$$

in which $\gamma$ and $\lambda$ are parameters.

These parameters can have for instance to the values used in reference [1].

In the above equation, Lrec is an image reconstruction term, Lsm is a smoothness term, and Lvel is a velocity term. The smoothness term Lsm and the velocity term Lvel are optional. These different terms will now be explained.

The image reconstruction term Lrec

In order to calculate the image reconstruction term Lrec, which constitutes the key supervision signal of the loss function, it is necessary to perform a task of *novel view synthesis.* This task has already been used for calculating depth and camera motion, mostly for binocular vision, and in some cases for monocular vision, with remarkable results: See in particular references [1] and [2].

In the specific context of the present disclosure, where all the images of the scene are acquired by the same camera ('monocular vision'), this task consists, for a considered image Is of the scene (at a certain time point ts), in synthetizing a synthetic view of the scene Rs,k, the 'reconstructed view', which represents the scene as it could have been imaged by the camera at the time point ts, based on another image Ik acquired by the camera at another time point tk different from time point ts at which the considered image Is was acquired.

In order to calculate the reconstructed view Rs,k, for an image Is (the 'sample image'), based on this other image, the 'additional image' Ik, the following data are necessary:

- the additional image Ik, acquired at an additional time point tk,
- the camera motion Ms,k between the sample time point ts and the additional time point tk, and
- the depth map Ds at the sample time point ts.
  Based on these data, a reconstructed view Rs,k of the scene at the sample time point ts, based on the image Ik acquired at said other time point tk, can be calculated as follows:
  In the reconstructed view Rs,k, the value of a pixel pT of Rs,k is calculated in two steps.

First, a position of the pixel pT in the additional image Ik is calculated, taking into account the motion Ms,k of the camera between the timings ts and tk, and the depth map Ds for the timing ts. Accordingly, the position of the pixel pT in the additional image Ik is calculated based on the camera motion Ms,k, and the depth map Ds.

Then, using bilinear interpolation, a theoretical pixel value at this calculated position in the additional image Ik is calculated. This later pixel value is therefore used at a pixel value at pixel pT in the reconstructed image Rs,k. This process is explained in detail in reference [2].

Importantly, a reconstructed view Rs,k calculated in this way is a differentiable function of the camera motion- and the depth- estimations: It can therefore be used to adapt (or to train) the camera motion- and the depth- estimators.

As mentioned before, in some embodiments the depth map estimator is configured to calculate a depth map at multiple scales.

In such embodiments, as mentioned above the position of a pixel pT in an additional image Ik is calculated based on the camera motion Ms,k, and the depth map Ds.

If a single reconstructed view is calculated for each of the depth map Ds (Ds hr), then the value of this pixel is only function of the four adjacent pixels. The value for a pixel P in the reconstructed view Rs,k can only be a combination of the values of the 4 pixels of Ik with coordinates Px,y; Px,y+1; Px+1,y; Px+1,y+1.

Conversely, if several reconstructed views are calculated for several depth maps (for instance, for Ds hr, Ds hr(mr), Ds hr (Ir)), since each pixel of these depth maps is (or may be) based itself on several adjacent pixels, the value of the pixel P of the reconstructed view will actually be based on more than the four closest adjacent pixels.

Thus, it is possible to improve the accuracy of the pixel coordinates used to calculate the reconstructed view, and consequently to improve the accuracy of the depth estimator. Accordingly, for a reconstructed view Rs,k for a sample image Is based on an additional image Ik to be calculated, it is necessary for system 200 to have acquired somehow beforehand the depth map Ds of the scene at time point ts and the camera motion Ms,k between the sample time point ts and the additional time point tk.

In this purpose, in the proposed method, in order to calculate a reconstructed view Rs,k, the depth map Ds has to be predicted (i.e., calculated) by the depth estimator DE, using the latest version of the parameters or weights of the depth estimator DE.

On the other hand, the camera motion Ms,k needed to calculate a reconstructed view Rs,k does not necessarily have to be recalculated, in a method according to the present disclosure. Indeed, the camera motion Ms,k can either be retrieved from a memory, which can be called a 'replay buffer' (RB) where it had been stored; or it can be recalculated during the current iteration based on the images Is, Ik. If the camera motion Ms,k to calculate a reconstructed view Rs,k is retrieved from a memory, it is then part of the sample acquired at step S40 for which the reconstructed view Rs,k is calculated.

In embodiments in which a camera motion estimator which is a neural network is used to calculate camera motions, at step S52 each camera motion Ms,k (for each additional image Ik of the considered sample) has to be calculated by the camera motion estimator based on the images Is and Ik.

In order to calculate the loss reconstruction term Lrec, at least one reconstructed view Rs,k is necessary. For this reason, a minimum sample to calculate the loss reconstruction term and therefore to calculate the loss function must comprise at least a sample image Is and at least one additional image Ik.

A reconstructed view Rs,k is calculated for each additional image Ik of a considered sample and for each high resolution depth map Ds that has been calculated for image Is. (There may be only the depth map Ds hr outputted by the depth estimator DE for image Is; or, as in the present embodiment, there can be a plurality of depth maps, for instance the depth maps Ds hr, Ds hr(mr) and Ds hr(Ir) previously presented).

Once the reconstructed view(s) has/have been calculated, the image reconstruction term Lrec can then be calculated as a supervisory signal as follows, based on the differences (or discrepancy) between the considered sample image Is and the calculated reconstructed view(s) Rs,k:

As a first possibility, if only one reconstructed view Rs,k is calculated, the image reconstruction term Lrec can be calculated as:

$$L_{rec} = L_p$$

where Lp is a photoconsistency error between the considered sample image Is and its reconstructed view Rs,k. Various functions can be used to calculate Lp. For instance, the standard image dissimilarity measure proposed by reference [7] can be used.

If several reconstructed views Rs,k are calculated, the value of the image reconstruction term Lrec can be obtained as the average, or preferably as the minimum, of the respective values Lp obtained for the respective reconstructed views Rs,k. An exemplary embodiment where the minimum function is selected will be given below, in a case where a masking function ($\mu$) is also used.

The need to mask out some pixels from the image is based on the observation that the training performance can strongly diminish:

- when there are objects in the scene, for instance other vehicles, which move at substantially the same speed as the car,
- when the car is at a standstill, and/or
- when portions of the image have a uniform colour, that is, a colour that does not change over time (over multiple images).

  (It is assumed here that the camera is fixed relative to the car.)

In order to handle such cases, as explained in reference [1], a masking function μ may be used to exclude from the loss function the pixels for which the reprojection error, when calculating the image reconstruction term, is larger than the photoconsistency error between the sample and the additional image but without reconstruction (without reprojecting the pixel). In this case, if only one reconstructed view Rs,k is used, the image reconstruction term Lrec can be calculated as:

$$L\,rec = \mu \cdot Lp$$

where a masking function μ is applied to the reprojection error Lp.

The masking function μ is preferably configured to disregard or mask out from the images (that is, more precisely, from the sample image Is and the reconstructed view Rs,k), the pixels which comprise no useful information for calculating the depth or the camera motion. These pixels can be for instance pixels which represent objects in the scene, for instance other vehicles, which move at substantially the same speed as the car (or the camera); the pixels of the scene which represent parts of the scene apparently stationary relative to the camera; and/or the pixels of portions of these image which have a uniform colour.

If for a sample, several reconstructed images Rs,k are calculated, the image reconstruction term Lrec is calculated as:

$$L\,rec = \mu \cdot Lmin$$

where Lmin is a minimum reprojection error, calculated as follows:

$$L_{min} = \min_{k} L_p\,(I_s, R_{s,k})$$

where

$I_s$ (i.e., Is) is the considered sample image, at time point ts;
$R_{s,k}$ (i.e., Rs,k) is the reconstructed view at time point ts, based on an additional image Ik at a time point tk; and
L min is a per-pixel minimum over photoconsistency errors Lp between the considered sample image Is and its reconstructed views Rs,k at the different time points tk.

The optional masking function μ is used to disregard, when calculating the image reconstruction term Lrec, the pixels which comprise no useful information for calculating the depth or the camera motion (Examples of such pixels have been given above).

A suitable example of the masking function μ is for instance the 'auto-masking function' proposed by reference [1].

In a preferred embodiment, two reconstructed views are used to calculate the image reconstruction term Lrec for a sample image Is:

• the reconstructed view Rs,s+1, based on the sample image Is and the image Is+1 at time point ts+1 (the image acquired immediately after the sample image Is), and
• the reconstructed view Rs,s-1, based on the sample image Is and the image Is-1 at time point ts-1 (the image acquired immediately before the sample image Is).

The loss function presented above is particularly efficient in the case of a 'rigid scene', that is, a scene in which there is no moving object.

However, the masking functions proposed above have no 'understanding' of the context, that is, of what is taking place around the car. For this reason, these functions often fail to mask many pixels that should be masked out because the information that they include cannot actually be used to calculate the depth or the camera motion.

This arises in particular when mobile objects are present in the scene around the car and therefore appear in the acquired images.

In order to address such situations, in order to improve the performance of the depth- and camera motion-estimators, in some embodiments mobile object detectors (MOD) may further be used in the proposed method. Such object detectors are computer-implemented functional units capable of detecting mobile objects moving in the scene relative to the camera. Such moving mobile objects are typically other cars, pedestrians, etc., which move around the mobile machine on which the camera is mounted.

Object detectors are disclosed for instance by references [4], [5] and [6]. As another alternative, the moving objects of a scene can be identified on the basis of the optical flow (and discontinuities thereof). Accordingly, the above-proposed masking function $\mu$ can be based on detecting moving objects using an optical flow of acquired images. Such a method for detecting moving objects is disclosed for instance by reference [10].

Preferably, the mobile object detectors are capable not only of identifying the pixels which represent a mobile object identified in the scene, but are also capable of estimating the 3D-location, or preferably the 6D-location of the object, and also optionally the relative motion, and in some cases acceleration, of the mobile objects moving around the car.

When object detectors are used, the masking function $\mu$ is configured so as to exclude, from the loss reconstruction term calculation, all the pixels which, in a considered sample image Is and a corresponding reconstructed image Rs,k, represent detected moving object(s).

This can be done for instance, when generating a reconstructed view Rs,k, by masking pixels representing a mobile object identified in the scene, said pixels being identified by said at least one mobile object detector MOD.

The smoothness term Lsm

In order to regularize the predicted depth Ds, in particular for the textureless areas of the acquired images, the loss function also includes a smoothness term Lsm, calculated as:

$$L_{sm} = \left[\partial x D^{-1}\right] e^{-\partial xI} + \left[\partial x D^{-1}\right] e^{-\partial yI}$$

where $\partial_x, \partial_y$ denote the gradients respectively along axis x and y, and $D^{-1}$ represents 1/D. This term is computed only for the sample image Is, for which the reconstruction loss term Lrec is calculated. This smoothness term Lsm penalizes depth discontinuities in continuous image regions.

The smoothness term can be calculated for instance using the method explained in reference [1].

The velocity term Lvel

The loss function L further comprises a velocity supervision term Lvel. Advantageously in mobile machines, such as vehicles, such an additional supervision term is usually possible without extra expense, since most mobile machines have velocity measuring systems on board. For instance, in the present exemplary embodiment, the car 10 includes a velocity meter 130.

The velocity supervision term Lvel is a term that penalizes the difference between the magnitude of the calculated motion of the camera between a sample time point ts and a time point tk of another image for which a reconstructed view Rs,k is calculated, and the magnitude of the actual motion of the car during these two time points.

In most cases, the comparison is made simply between the calculated translation Ds,k distance Ds,k between the two time points ts,tk and the actual travelled distance, determined based on the acquired velocity Vs,k.

In this case, the velocity supervision term Lvel is expressed as:

$$L_{vel} = \sum_{k} | D_{s,k} - \Delta t_{s,k} V_{s,k} |$$

where

$D_{s,k}$ is the distance travelled by the camera between the sample time point ts and the time point tk
$\Delta t_{s,k}$ is the time difference between the sample time point ts and the time point tk, and
$V_{s,k}$ is the velocity (or speed) of the camera relative to the scene between time ts and tk.

Advantageously, including the velocity term in the loss function forces the camera motion-estimator and the depth-estimator to learn the scale of the scene.

Prediction method: Operation of the prediction system

As explained before, according to the present disclosure, the depth- and optionally the camera motion-estimators are trained continuously (or at least at one or more adaptation iterations) during exploitation.

This training is performed based on:

- newly acquired data, forming a 'current sample', which relate to the current time point tj (for the iteration i=j) and one or more past time points (e.g., tj-2 and tj-1), and
- at least one past sample, which usually relate(s) to former time points that are before the current time point tj (possibly a long time before, e.g. more than 3 seconds, or more than 10 seconds).

A replay buffer RB is used to help perform continuous adaptation of the estimators during the training steps, while avoiding overfitting.

This replay buffer RB stores sequences of images previously acquired by the camera.

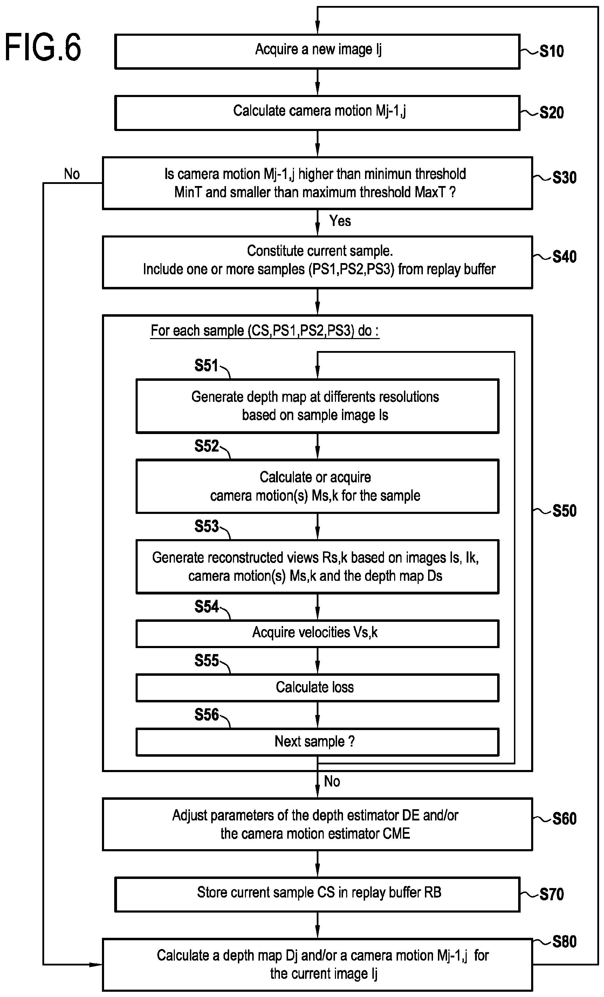

Embodiments of prediction methods according to the present disclosure will now be presented in relation with Figs.6 and 7.

The method comprises multiple iterations or loops. At each loop (or iteration) an index i of the loop is incremented.

The method comprises the following two core steps, which are normally repeated iteratively at each loop (i=j) in order to calculate the current depth map Dj and/or the current motion Mj-1,j of the camera:

S10) Acquisition of an image Ij, called 'the current image', outputted by the camera 121 at the current time point tj; and
S80) Prediction, for the current time point tj, of a depth map Dj and/or of the current camera motion Mj-1,j, based (at least) on the current image Ij. The depth map is calculated with the depth estimator DE, and the camera motion Mj-1,j is calculated with the camera motion estimator CME.

The depth map calculated at this step includes at least the high resolution depth map Dj hr, which will be used as an input for various functions for the car 10.

Importantly, the method further comprises, usually continuously, training depth estimator DE, and in the presented embodiment, the camera motion estimator CME. In this purpose, in addition to the above core steps, the method further comprises additional training steps. In the embodiment presented here, these training steps are performed when the core steps have already been executed at least twice (for the first two values of the index i, that is, for i=0 and i=1). At the end of these two initial iterations, the images I0 and I1 have been acquired, and are therefore available at step i=2 to constitute a first current sample comprising images I0, I1 and I2.

After this initialisation, when an adaptation iteration for i=j (j>1) takes place, at a current time point tj, the prediction method comprises carrying out the following training steps S20, S30, S40, S50 and S60 after step S10:

S20. Current camera motion calculation

At step S20, the current value of the camera motion Mj-1,j is calculated by the camera motion estimator CME. The camera motion Mj-1,j represents an estimated value of the motion of the camera between a past time point tj-1 (which is a time point before time point tj) and the current time step tj. In the present embodiment, the current camera motion Mj-1,j is calculated based on the last acquired image Ij-1 and the current image Ij. As mentioned before, other methods can be used to acquire the current camera motion Mj-1,j (if a machine-learning based camera motion estimator is not based). For instance, an inertial measurement unit (IMU) can be used to obtain this value.

Note, when the current loop for i=j is executed, a 'past camera motion', which refers here to the camera motion Mj-2,j-1 between time points tj-2 and tj-1, has already been calculated at the previous iteration of the algorithm on the basis of the image Ij-2, acquired at the time point tj-2, and of the past image Ij-1, and may therefore be used to calculate a reconstructed image Rj-1,j-2 for the image Ij-1 (considered as a sample image) based on the image Ij-2, used as an additional image.

S30. Determination of whether the current camera motion Mj-1,j is above a minimum threshold or below a maximum threshold

Then, it is determined whether the current camera motion Mj-1,j is above a minimum threshold MinT. Here, it must be understood that the 'current camera motion' in the previous sentence means broadly a value representative of a norm of the current camera motion. In some embodiments, the value of the translation of (that is, the distance travelled by) the camera is used as the current camera motion for the comparison performed at this step.

In addition, it may be further determined whether the camera motion is below a maximum threshold MaxT. Indeed, if the distance travelled between two iterations is too high, or if the rotation of the camera between the two images is too high, trying to train the depth- and/or camera motion- estimators based on the current image Ij may be useless.

If it is determined that the camera motion is below the minimum threshold MinT or above the maximum threshold MaxT, it is considered that the camera is not moving relative to the scene, or is moving too much relative to the scene, and the algorithm jumps to step S70.

Otherwise, in order to train the depth- and camera motion- estimators based on the current image Ij, the algorithm continues at step S40.

S40. Preparation of samples for the adaptation iteration

Since it has been concluded at step S30 that the depth- and camera motion-estimators have to be trained, at step S40 training samples are prepared.

These samples comprise a current sample CS, and one or more past samples PS (PS1, PS2, PS3 in the example below).

The current sample CS is prepared. In the present embodiment, it includes:

- the current image Ij, as a first additional image, at the first additional time point tj,
- the image Ij-1 acquired at the sample time point tj-1, as the sample image,
- the image Ij-2 acquired at the second additional time point tj-2, as a second additional image, and
- the velocities Vj-1,j and Vj-1,j-2 between tj-1 and tj, and between tj-1 and tj-2, respectively (outputted by velocity sensor 130).

In addition, at least one past sample is generated. In some embodiments, two, three samples or more may be generated and then used for training the estimators.

Preferably, the sample time point of each of the past sample(s) is different from the sample time point of the current sample.

In the present embodiment, three past samples PS1, PS2 and PS3 are retrieved from the replay buffer RB, for three past time points. These past time points can be randomly chosen time points. Preferably, there is at least a 10 seconds period between two of these past time points, so that the past samples be different from each other.

In this embodiment, each sample comprises a sample image Is, and two additional images Is-1 and Is+1, acquired respectively at the additional time points ts-1 and ts+1.

In this embodiment, for each past sample, the velocity values Vs,k between time point ts and the additional time points tk are also retrieved at this step from the replay buffer and integrated to the considered past sample.

When the training samples (the current sample CS and one or more past samples TS) have been prepared, the depth- and camera motion- estimators are trained. This implies a preparatory step S50 and a training step S60.

S50 Preparatory step for preparing the training

To prepare the training of the depth- and camera motion- estimators, for each sample, the following steps are carried out:

S51. Generation of the depth map

To calculate the reconstructed view at the sample time ts, the depth map Ds at sample time point ts is necessary.

At step S52, this depth map Ds at sample time point ts is calculated with the depth estimator DE.

When (as in the embodiment presented herein) the depth estimator is configured to output depth maps at different scales, such as depth maps Dj lr, Dj mr and Dj hr, at step S52 high resolution depth maps Ds hr(lr), Ds hr (mr) and Ds hr are calculated.

S52. Calculation of the camera motion

To calculate the reconstructed view at the sample time ts, for each additional image Ik included in the sample, the camera motion Ms,k between the sample time point ts and the time point tk is necessary.

If the value of the camera motion Ms,k is already available to system 200 (for instance it is included in the considered sample, retrieved at step S40), then this value can be used; otherwise, at step S52 the camera motion Ms,k is calculated. It can be calculated for instance on the basis of images Is and Ik.

S53. Generation of the reconstructed view(s)

At step S53, for each additional image Ik, and for each high resolution depth map (Ds hr(lr), Ds hr (mr) and Ds hr) that has been calculated, a reconstructed view Rs,k is calculated.

In this embodiment, as mentioned above, each sample comprises the sample image Is and the two additional images Is-1 and Is+1. Accordingly, at step S53, for each of the calculated depth maps Ds hr, Ds hr(mr) and Ds hr(lr), the two reconstructed views Rs,s-1 and Rs,s+1 are calculated. (As mentioned before, in other embodiments, the samples may comprise more or fewer additional images, and accordingly more or fewer reconstructed views can be calculated for each sample).

### S54. Velocity(ies) acquisition

At step S54, for each additional image $Ik$ of the sample, the velocity $Vs,k$ is acquired. In the present embodiment, this step is part of step S40, since the velocities are integrated to the samples acquired at this step.

### S55. Loss calculation

Then, at step S54 the value of the loss function L is calculated for each sample.
When (as in the embodiment presented herein) the depth estimator is configured to output depth maps at different scales, such as depth maps $Dj\ lr$, $Dj\ mr$ and $Dj\ hr$, at step S55 the value of the loss function is calculated for each high resolution depth map(s) obtained at step S53. In the present embodiment, a value of the loss function is therefore calculated for each sample, and for each of the depth maps $Dj\ hr$, $Dj\ hr(mr)$ and $Dj\ hr(lr)$.

### S56. End-of-loop check

Then, at step S55, it is determined whether the training preparatory steps S51-S55 have to be executed for another sample or not.
When the preparatory steps S51-S55 have been executed for all samples, for instance, for the current sample CS and the past samples PS1, PS2 and PS3, the algorithm continues at step S60.

### S60. Adjustment of the depth- and camera motion- estimators

Then, based on the values of the loss function L, calculated for each of the samples, the weights of the depth estimator DE and of the camera motion estimator CME are updated by backpropagation.
When a plurality of depth maps at different resolutions have been calculated at step S51, such as depth maps $Dj\ lr$, $Dj\ mr$ and $Dj\ hr$, at step S60 the value of the loss function taken into account for updating these weights is a combination (for example, a weighted sum) of the values of the loss function calculated for each high-resolution depth map(s) ($Dj\ hr$, $Dj\ hr\ (mr)$ and $Dj\ hr(lr)$) that has been calculated, and for each sample.
The updated weights are calculated by minimizing (or possibly maximizing) the sum of the values of the loss function L for all the samples and for all the depth maps.

### S70. Backup of the current sample CS

The current sample CS is then saved in the replay buffer RB.

### S80. Prediction for the current time point tj, of a depth map Dj and/or of the current camera motion Mj-1,j

Usually, the prediction step S80 is then executed, at the end of the adjustment step S60: The current depth map $Dj$ and the current camera motion $Mj-1,j$ are calculated for the current time point $tj$, using the depth- and camera motion-estimators DE and CME, whose parameters have just been adjusted at step S70.
The algorithm then jumps back at step S10.
The above-algorithm is also illustrated by Fig.7. Fig.7 shows in particular the main data retrieved, calculated, exchanged during an adaptation iteration executed at time point $ts+1$ ($i=s+1$)).
The left part of Fig.7 shows the preparation of the data constituting the different samples (step S40): On one hand, three past samples PS1, PS2 and PS3 are prepared, based on data retrieved from the replay buffer RB. In addition, the current sample CS is prepared based on the images $Ij-2$, $Ij-1$ and $Ij$ outputted by the camera 121, and on the velocities outputted by the velocity meter 130.
Then, each of these samples undergoes the same process (steps S50, S60) shown on the two central boxes on Fig.7.
On Fig.7, this process is illustrated in the case of a generic sample for a generic sample time point $ts$, which comprises a sample image $Is$, and two additional images $Is-1$ and $Is+1$.
In the case of the current sample CS, for which $i=j$ (the current time point is $tj$), the image $Ij-1$ acquired at the previous time point is used as the sample image $Is$: $s=j-1$. Accordingly, the current image $Ij$ and the image $Ij-2$ are the two additional images. Consequently, the images $Is-1$, $Is$ and $Is+1$ are actually, in the current sample CS, the images $Ij-2$, $Ij-1$ and $Ij$.

The central box on Fig.7 corresponds to step S50 (preparatory step). On the left, the images Is-1, Is, and Is+1 are represented.

The preparatory steps S51-S55 of step S50 are carried out in order to prepare all the data necessary to calculate the value of the loss function for the considered sample:

At step S51, the depth map estimator DE generates the depth map Ds. Actually, three depth maps Ds Ir, Ds mr and Ds hr are calculated and on this basis, the three corresponding high resolution depth maps Ds hr(Ir), Ds hr(mr) and Ds hr are calculated.

At step S52, the camera motion estimator calculates the camera motions Ms,s-1 and Ms,s+1 are calculated, based on images Is and Is-1, and on Is, Is+1 respectively (using the latest values of the weights, for the camera motion estimator CME).

At step S53, a reconstructed view calculation module RVCM calculates the reconstructed views Rs,s-1, and Rs,s+1. These reconstructed views are calculated for each of the high resolution depth maps Ds hr(Ir), Ds hr(mr) and Ds hr.

At step S54 the velocities Vs,s-1 and Vs,s+1, are acquired: In the present embodiment, these velocities are actually acquired with the other data of the considered sample, obtained either from the replay buffer, or from speed sensor 130.

All the values calculated or acquired at steps S51-S54 are transmitted to a loss function calculation module LFCM.

At step S55, the loss function calculation module LFCM calculates the value of the loss functions, for each one of the samples (CS,PS1,PS2,PS3).

Based on the respective values of the loss function for the respective samples CS, PS1, PS2 and PS3, and for each of the depth maps Ds Ir, Ds mr and Ds hr at different resolutions that have been calculated, the values of the weights of the depth- and camera motion- estimators DE and CME are updated by backpropagation, in an estimator adjustment module EAM (step S60). Finally, the current sample CS is stored in the replay buffer (arrow A).

Those skilled in the art will recognize that the present invention may be manifested in a variety of forms other than the specific embodiments described and contemplated herein. Accordingly, departure in form and detail may be made without departing from the scope of the present invention as described in the appended claims.

**Claims**

1. A computer-implemented prediction method for iteratively predicting a depth map (Dj) using at least a depth estimator (DE), the depth estimator being a neural network;

   the method comprising iteratively:

   S10) acquiring a current image (Ij) from a single camera at a current time point (tj);
   S80) for the current time point (tj), predicting a depth map (Dj) with the depth estimator (DE), based on the current image (Ij);

   the prediction method comprising, in each one of a multiplicity of iterations, called an adaptation iteration, after the acquisition step S10:

   S40) acquiring a current sample (CS) and at least one past sample (PS1,PS2,PS3); wherein
   each of said samples (CS, PS1,PS2,PS3) includes a sample image (Is) acquired from the camera at a sample time point (ts), and at least one additional image (Ik) acquired from the camera at an additional time point (tk) different from the sample time point (ts);
   in the current sample (CS), the sample image or one of the at least one additional image is the current image (Ij); and
   in each of the at least one past sample (PS1,PS2,PS3), none of the images is the current image (Ij);
   S50) for each considered sample among said samples (CS,PS1,PS2,PS3), performing preparatory steps in view of adjusting parameters at least of the depth estimator (DE), the preparatory steps comprising:

   S51) generating a depth map (Ds) for the sample image (Is) of the considered sample with the depth estimator (DE);
   S52) for each additional image (Ik), calculating or acquiring a camera motion (Ms,k) between the sample time point (ts) and the additional time point (tk) of the additional image (Ik);
   the camera motion (Ms,k) between the sample time point (ts) and the additional time point (tk) of the additional image (Ik) being a motion of the camera between a position thereof at the sample time point (ts) and a position of the camera at the additional time point (tk);

S53) for each additional image (Ik), generating a reconstructed view (Rs,k) for the sample image (Is), based on the additional image (Ik);

a reconstructed view (Rs,k) for the sample image (Is) representing a view of the scene as could be imaged by the camera from a position of the camera at the sample time point (ts);

the reconstructed view (Rs,k) for the sample image (Is) based on a certain additional image (Ik) being calculated on the basis of the certain additional image (Ik), the depth map (Ds) for the sample image (Is), and the camera motion (Ms,k) between the sample time point (ts) and the additional time point (tk) of the certain additional image (Ik); and

S55) calculating the value of a loss function (L) for the considered sample (CS,PS1,PS2,PS3), the loss function including an image reconstruction term (Lrec) that represents a per-pixel photoconsistency error between the sample image (Is) acquired at the sample time point (ts) and said at least one reconstructed view (Rs,k) for the sample image (Is) generated based on the

at least one additional image (Ik);

S60) adjusting parameters at least of the depth estimator (DE), based on the respective values of the loss function (L) calculated for the respective samples (CS,PS1,PS2,PS3),

the prediction method being **characterized in that**:

said loss function (L) includes a velocity supervision term (Lvel) that penalizes difference(s) between a motion (Ms,k) of the camera calculated at step S55 and an actual motion of the camera between the sample time point (ts) and the at least one additional time point (tk) of the considered sample;

the velocity supervision term is calculated as:

$$L_{vel} = \sum_k | D_{s,k} - \Delta t_{s,k} V_{s,k} |$$

where

$D_{s,k}$ is the distance travelled by the camera between the sample time point ts and the time point tk, $\Delta t_{s,k}$ is the time difference between the sample time point ts and the time point tk, and

$V_{s,k}$ is a velocity of the camera relative to the scene between time ts and tk; the image reconstruction term (Lrec) of the loss function is expressed as:

$$Lrec = \mu * Lpix,$$

where Lpix is a per-pixel photoconsistency error between the sample image (Is) and said at least one reconstructed view (Rs,k) generated based on said at least one additional time points (tk), and $\mu$ is a per-pixel mask, in particular a mask ($\mu$_auto) configured to mask out pixels of the image which represent points of the scene whose motion is equal or substantially equal to the motion (Ms,k) of the camera (121) relative to the scene;

the per-pixel photoconsistency error Lpix is a minimum reprojection error calculated as follows:

$$L_{pix} = \min_k Lp_{s,k} (I_s, R_{s,k})$$

where

$I_s$ is the sample image (Is),

$R_{s,k}$ is the reconstructed view Rs,k for the sample image Is, based on an additional image Ik, and

$Lp_{s,k}$ is a per-pixel minimum photoconsistency error between the image Is and the reconstructed view Rs,k; and wherein

in step S51, a plurality of depth maps (Ds hr, Ds mr, Ds lr) at different resolutions are generated for the sample image (Is) of the considered sample, with the depth estimator (DE);

in step S53, reconstructed view (Rs,k) for the sample image (Is), based on the additional image (Ik) are generated for each additional image (Ik) and for each depth map of said plurality of depth maps;

in step S55, a value of the loss function (L) for the considered sample (CS,PS1,PS2,PS3) is calculated for each depth map of said plurality of depth maps; and

in step S60, the parameters of at least of the depth estimator (DE) are adjusted based on the respective values of the loss function (L) calculated for the respective samples and for each depth map of said plurality of depth maps

2. The prediction method according to claim 1, wherein:

during said camera motion calculation or acquisition step S52, the camera motion (Ms,k) is calculated using a camera motion estimator (CME) which is a trainable model, based on the sample image (Is) and the additional image (Ik); and

the method comprises, at said parameters adjustment step S60, further adjusting parameters of the camera motion estimator (CME).

3. The prediction method according to any one of claims 1 to 2, wherein, the value of said loss function (L) is calculated so as not to take into account, in the sample image (Is), pixels representing a moving object identified in the scene.

4. The prediction method according to any one of claims 1 to 3, wherein the depth estimator (DE) and/or the camera motion estimator (CME) comprises a U-net.

5. One or more computer programs **characterized by** comprising instructions which, when the instructions are executed by a computer, cause the computer to carry out the steps of a prediction method according to any one of claims 1 to 4.

6. A non-transitory computer readable medium (111), having the one or more computer programs according to claim 5 stored thereon.

7. A computer-implemented prediction system (200) for iteratively predicting a depth map (Dj) using at least a depth estimator (DE), the depth estimator being a neural network; the prediction system (200) comprising one or more processors (112) and a computer-readable medium (111);

the computer-readable medium (111) comprising computer instructions stored therein, wherein the instructions, when executed by the one or more processors, cause the one or more processors to carry out the steps of a prediction method according to any one of claims 1 to 4.

8. A mobile machine (10), for instance a vehicle or a robot, comprising a single camera (121) and a computer-implemented prediction system (200) according to claim 7, the computer-implemented prediction system (200) being configured to acquire images from the camera (121).

**Patentansprüche**

1. Computerimplementiertes Vorhersageverfahren zum iterativen Vorhersagen einer Tiefenkarte (Dj) unter Verwendung von mindestens einem Tiefenschätzer (DE), wobei der Tiefenschätzer ein neuronales Netzwerk ist;

wobei das Verfahren iterativ Folgendes umfasst:

S10) Erfassen eines aktuellen Bildes (Ij) von einer einzelnen Kamera zu einem aktuellen Zeitpunkt (tj),

S80) Vorhersagen einer Tiefenkarte (Dj) für den aktuellen Zeitpunkt (tj) mit dem Tiefenschätzer (DE) auf Basis des aktuellen Bildes (Ij);

wobei das Vorhersageverfahren bei jeder der Mehrzahl von Iterationen das Aufrufen einer Anpassungsiteration nach dem Erfassungsschritt S10 umfasst:

S40) Erfassen eines aktuellen Beispiels (CS) und mindestens eines vorherigen Beispiels (PS1,PS2,PS3); wobei

jedes der Beispiele (CS, PS1,PS2,PS3) ein Beispielbild (Is), das von der Kamera zu einem Beispielzeitpunkt (ts) erfasst wird, sowie mindestens ein zusätzliches Bild (Ik) beinhaltet, das von der Kamera zu einem zusätzlichen Zeitpunkt (tk) erfasst wird, der sich vom Beispielzeitpunkt (ts) unterscheidet;

im aktuellen Beispiel (CS) das Beispielbild oder eines des mindestens einen zusätzlichen Bildes das aktuelle Bild (Ij) ist; und

in jedem des mindestens einen vorherigen Beispiels (PS1,PS2,PS3) keines der Bilder das aktuelle Bild (Ij) ist;

S50) Durchführen von Vorbereitungsschritten zum Anpassen von Parametern mindestens des Tiefenschätzers (DE) für jedes berücksichtigte Beispiel unter den Beispielen (CS,PS1,PS2,PS3), wobei die Vorbereitungsschritte Folgendes umfassen:

S51) Erzeugen einer Tiefenkarte (Ds) für das Beispielbild (Is) des berücksichtigten Beispiels mit dem Tiefenschätzer (DE);

S52) Berechnen oder Erfassen einer Kamerabewegung (Ms,k) zwischen dem Beispielzeitpunkt (ts) und dem zusätzlichen Zeitpunkt (tk) des zusätzlichen Bildes (Ik) für jedes zusätzliche Bild (Ik);

wobei die Kamerabewegung (Ms,k) zwischen dem Beispielzeitpunkt (ts) und dem zusätzlichen Zeitpunkt (tk) des zusätzlichen Bildes (Ik) eine Bewegung der Kamera zwischen einer Position davon zum Beispielzeitpunkt (ts) und einer Position der Kamera zum zusätzlichen Zeitpunkt (tk) ist;

S53) Erzeugen einer rekonstruierten Ansicht (Rs,k) für das Beispielbild (Is) für jedes zusätzliche Bild (Ik) auf Basis des zusätzlichen Bildes (Ik);

wobei eine rekonstruierte Ansicht (Rs,k) für das Beispielbild (Is) eine Ansicht der Szene repräsentiert, die von der Kamera von einer Position der Kamera zum Beispielzeitpunkt (ts) abgebildet werden könnte;

wobei die rekonstruierte Ansicht (Rs,k) für das Beispielbild (Is) auf Basis eines gewissen zusätzlichen Bildes (Ik) auf Basis des gewissen zusätzlichen Bildes (Ik), der Tiefenkarte (Ds) für das Beispielbild (Is) und der Kamerabewegung (Ms,k) zwischen dem Beispielzeitpunkt (ts) und dem zusätzlichen Zeitpunkt (tk) des gewissen zusätzlichen Bildes (Ik) berechnet wird; und

S55) Berechnen des Wertes einer Verlustfunktion (L) für das berücksichtigte Beispiel (CS,PS1,PS2,PS3), wobei die Verlustfunktion einen Bildrekonstruktionsterm (Lrec) beinhaltet, der einen Fotokonsistenzfehler pro Pixel zwischen dem Beispielbild (Is), das zum Beispielzeitpunkt (ts) erfasst wird, und der mindestens einen rekonstruierten Ansicht (Rs,k) für das Beispielbild (Is), die auf Basis des mindestens einen zusätzlichen Bildes (Ik) erzeugt wird, repräsentiert;

S60) Anpassen von Parametern mindestens des Tiefenschätzers (DE) auf Basis der jeweiligen Werte der Verlustfunktion (L), die für die jeweiligen Beispiele (CS,PS1,PS2,PS3) berechnet werden, wobei das Vorhersageverfahren **dadurch gekennzeichnet ist**:

**dass** die Verlustfunktion (L) einen Geschwindigkeitsüberwachungsterm (Lvel) beinhaltet, der einen oder mehrere Unterschiede zwischen einer Bewegung (Ms,k) der Kamera, die in Schritt S55 berechnet wird, und einer tatsächlichen Bewegung der Kamera zwischen dem Beispielzeitpunkt (ts) und dem mindestens einen zusätzlichen Zeitpunkt (tk) des berücksichtigten Beispiels bestraft; der Geschwindigkeitsüberwachungsterm wird wie folgt berechnet:

$$L_{vel} \; = \; \sum_k | \; D_{s,k} \; - \; \Delta t_{s,k} \; V_{s,k} \; |$$

wo

$D_{s,k}$ die Strecke ist, die von der Kamera zwischen dem Beispielzeitpunkt ts und dem Zeitpunkt tk zurückgelegt wird,

$\Delta t_{s,k}$ der Zeitunterschied zwischen dem Beispielzeitpunkt ts und dem Zeitpunkt tk ist, und

$V_{s,k}$ eine Geschwindigkeit der Kamera relativ zur Szene zwischen der Zeit ts und tk ist;

der Bildrekonstruktionsterm (Lrec) der Verlustfunktion als Folgendes ausgedrückt wird:

$$Lrec = \mu * Lpix,$$

wo Lpix ein Fotokonsistenzfehler pro Pixel zwischen dem Beispielbild (Is) und der mindestens einen rekonstruierten Ansicht (Rs,k) ist, die auf Basis von mindestens einem zusätzlichen Zeitpunkten (tk) erzeugt wird, und μ eine Maske pro Pixel ist, insbesondere eine Maske (μ_auto), die dazu ausgelegt ist, Pixel des Bildes zu maskieren, die Punkte der Szene repräsentieren, deren Bewegung gleich oder im Wesentlichen gleich der Bewegung (Ms,k) der Kamera (121) relativ zur Szene ist;

der Fotokonsistenzfehler Lpix pro Pixel ist ein minimaler Reprojektionsfehler, der wie folgt berechnet wird:

$$L_{pix} = \min_{k} Lp_{s,k}(I_s, R_{s,k})$$

wo

$I_s$ das Beispielbild (Is) ist,

$R_{s,k}$ die rekonstruierte Ansicht Rs,k für das Beispielbild Is auf Basis eines zusätzlichen Bildes Ik ist, und

$Lp_{s,k}$ ein minimaler Fotokonsistenzfehler pro Pixel zwischen dem Bild Is und der rekonstruierten Ansicht Rs,k ist; und wobei

in Schritt S51 eine Vielzahl von Tiefenkarten (Ds hr, Ds mr, Ds Ir) mit verschiedenen Auflösungen für das Beispielbild (Is) des berücksichtigten Beispiels mit dem Tiefenschätzer (DE) erzeugt werden;

in Schritt S53 eine rekonstruierte Ansicht (Rs,k) für das Beispielbild (Is) auf Basis des zusätzlichen Bildes (Ik) für jedes zusätzliche Bild (Ik) und für jede Tiefenkarte der Vielzahl von Tiefenkarten erzeugt werden;

in Schritt S55 ein Wert der Verlustfunktion (L) für das berücksichtigte Beispiel (CS,PS1,PS2,PS3) für jede Tiefenkarte der Vielzahl von Tiefenkarten berechnet wird und

in Schritt S60 die Parameter mindestens des Tiefenschätzers (DE) auf Basis der jeweiligen Werte der Verlustfunktion (L), die für die jeweiligen Beispiele und für jede Tiefenkarte der Vielzahl von Tiefenkarten berechnet werden, angepasst werden

2. Vorhersageverfahren nach Anspruch 1, wobei:

während der Berechnung der Kamerabewegung oder des Erfassungsschritts S52 die Kamerabewegung (Ms,k) unter Verwendung eines Kamerabewegungsschätzers (CME), bei dem es sich um ein trainierbares Modell handelt, auf Basis des Beispielbildes (Is) und des zusätzlichen Bildes (Ik) berechnet wird; und

das Verfahren im Parameteranpassungsschritt S60 ferner das Anpassen von Parametern des Kamerabewegungsschätzers (CME) umfasst.

3. Vorhersageverfahren nach einem der Ansprüche 1 bis 2, wobei der Wert der Verlustfunktion (L) derart berechnet wird, dass Pixel im Beispielbild (Is) ein sich bewegendes Objekt repräsentieren, das in der Szene identifiziert wird, nicht berücksichtigt werden.

4. Vorhersageverfahren nach einem der Ansprüche 1 bis 3, wobei der Tiefenschätzer (DE) und/oder der Kamerabewegungsschätzer (CME) ein U-Netz umfasst.

5. Ein oder mehrere Computerprogramme, die **dadurch gekennzeichnet sind, dass** sie Anweisungen umfassen, die, wenn die Anweisungen von einem Computer ausgeführt werden, den Computer veranlassen, die Schritte des Vorhersageverfahrens nach einem der Ansprüche 1 bis 4 umzusetzen.

6. Nichttransitorisches computerlesbares Medium (111), auf dem das eine oder die mehreren Computerprogramme nach Anspruch 5 gespeichert sind.

7. Computerimplementiertes Vorhersagesystem (200) für das iterative Vorhersagen einer Tiefenkarte (Dj) unter Verwendung von mindestens einem Tiefenschätzer (DE), wobei der Tiefenschätzer ein neuronales Netzwerk ist; wobei das Vorhersagesystem (200) einen oder mehrere Prozessoren (112) und ein computerlesbares Medium (111) umfasst;

wobei das computerlesbare Medium (111) darauf gespeicherte Computeranweisungen umfasst, wobei die Anweisungen, wenn sie von dem einen oder den mehreren Prozessoren ausgeführt werden, den einen oder die mehreren Prozessoren veranlassen, die Schritte des Vorhersageverfahrens nach einem der Ansprüche 1 bis 4 umzusetzen.

8. Mobile Maschine (10), beispielsweise ein Fahrzeug oder ein Roboter, die eine einzelne Kamera (121) und ein computerimplementiertes Vorhersagesystem (200) nach Anspruch 7 umfasst, wobei das computerimplementierte Vorhersagesystem (200) dazu ausgelegt ist, Bilder von der Kamera (121) zu erfassen.

# EP 4 012 653 B1

**Revendications**

1. Procédé de prédiction mis en œuvre par ordinateur pour prédire de manière itérative une carte de profondeur (Dj) à l'aide d'au moins un estimateur de profondeur (DE), l'estimateur de profondeur étant un réseau neuronal ;
le procédé comprenant la réalisation des étapes suivantes de manière itérative :

S10) acquérir une image actuelle (Ij) à partir d'une caméra unique à un point temporel actuel (tj) ;
S80) pour le point temporel actuel (tj), prédire une carte de profondeur (Dj) avec l'estimateur de profondeur (DE) sur la base de l'image actuelle (Ij) ;

le procédé de prédiction comprenant, dans chacune d'une multiplicité d'itérations appelées itérations d'adaptation, après l'étape d'acquisition S10 : S40), l'acquisition d'un échantillon (CS) actuel et d'au moins un échantillon (PS1, PS2, PS3) passé ; dans lequel
chacun desdits échantillons (CS, PS1, PS2, PS3) comporte une image d'échantillon (Is) acquise à partir de la caméra à un point temporel actuel d'échantillon (ts), et au moins une image supplémentaire (Ik) acquise à partir de la caméra à un point temporel actuel supplémentaire (tk) différent du point temporel actuel d'échantillon (ts) ;
dans l'échantillon (CS) actuel, l'image d'échantillon ou une de la ou des images supplémentaires est l'image actuelle (Ij) ; et
dans chacun du ou des échantillons (PS1, PS2, PS3) passés, aucune des images n'est l'image actuelle (Ij) ;

S50) pour chaque échantillon considéré parmi lesdits échantillons (CS, PS1, PS2, PS3), effectuer des étapes préparatoires en vue d'ajuster des paramètres au moins de l'estimateur de profondeur (DE), les étapes préparatoires comprenant :
S51) générer une carte de profondeur (Ds) pour l'image d'échantillon (Is) de l'échantillon considéré avec l'estimateur de profondeur (DE) ;
S52) pour chaque image supplémentaire (Ik), calculer ou acquérir un mouvement de caméra (Ms,k) entre le point temporel actuel d'échantillon (ts) et le point temporel actuel supplémentaire (tk) de l'image supplémentaire (Ik) ;
le mouvement de caméra (Ms,k) entre le point temporel actuel d'échantillon (ts) et le point temporel actuel supplémentaire (tk) de l'image supplémentaire (Ik) étant un mouvement de la caméra entre une position de celle-ci au point temporel actuel d'échantillon (ts) et une position de la caméra au point temporel actuel supplémentaire (tk) ;
S53) pour chaque image supplémentaire (Ik), générer une vue reconstruite (Rs,k) pour l'image d'échantillon (Is) sur la base de l'image supplémentaire (Ik) ;
une vue reconstruite (Rs,k) pour l'image d'échantillon (Is) représentant une vue de la scène telle qu'elle pourrait être imagée par la caméra depuis une position de la caméra au point temporel actuel d'échantillon (ts) ;
la vue reconstruite (Rs,k) pour l'image d'échantillon (Is) sur la base d'une certaine image supplémentaire (Ik) étant calculée sur la base de cette certaine image supplémentaire (Ik), de la carte de profondeur (Ds) pour l'image d'échantillon (Is) et du mouvement de caméra (Ms,k) entre le point temporel actuel d'échantillon (ts) et le point temporel actuel supplémentaire (tk) de cette image supplémentaire (Ik) ; et
S55) calculer la valeur d'une fonction de perte (L) pour l'échantillon (CS, PS1, PS2, PS3) considéré, la fonction de perte comportant un terme de reconstruction d'image (Lrec) qui représente une erreur de photo-consistance par pixel entre l'image d'échantillon (Is) acquise au point temporel actuel d'échantillon (ts) et ladite au moins une vue reconstruite (Rs,k) pour l'image d'échantillon (Is) générée sur la base de l'au moins une image supplémentaire (Ik) ;
S60) ajuster des paramètres au moins de l'estimateur de profondeur (DE) sur la base des valeurs respectives de la fonction de perte (L) calculées pour les échantillons (CS, PS1, PS2, PS3) respectifs,
le procédé de prédiction étant **caractérisé par** :

**le fait que** ladite fonction de perte (L) comporte un terme de supervision de vitesse (Lvel) qui pénalise la ou les différences entre un mouvement (Ms,k) de la caméra calculé à l'étape S55 et un mouvement réel de la caméra entre le point temporel actuel d'échantillon (ts) et l'au moins un point temporel actuel supplémentaire (tk) de l'échantillon considéré ;
le terme de supervision de vitesse est calculé comme suit :

$$L_{vel} \;=\; \sum_{k} |\; D_{s,k} \;-\; \Delta t_{s,k} \; V_{s,k} \;|$$

où

$D_{s,k}$ est la distance parcourue par la caméra entre le point temporel actuel d'échantillon ts et le point temporel actuel tk,

$\Delta t_{s,k}$ est la différence de temps entre le point temporel actuel d'échantillon ts et le point temporel actuel tk, et $V_{s,k}$ est une vitesse de la caméra par rapport à la scène entre les temps ts et tk ;

le terme de reconstruction d'image (Lrec) de la fonction de perte s'exprime comme suit :

$$Lrec = \mu * Lpix,$$

où Lpix est une erreur de photo-consistance par pixel entre l'image d'échantillon (Is) et ladite au moins une vue reconstruite (Rs,k) générée sur la base dudit au moins un point temporel actuel supplémentaire (tk), et $\mu$ est un masque par pixel, en particulier un masque ($\mu$\_auto) configuré pour masquer les pixels de l'image qui représentent des points de la scène dont le mouvement est égal ou sensiblement égal au mouvement (Ms,k) de la caméra (121) par rapport à la scène ;

l'erreur de photo-consistance par pixel Lpix est une erreur de reprojection minimale calculée comme suit :

$$L_{pix} = \min_{k} Lp_{s,k}(I_s, R_{s,k})$$

où

$I_s$ est l'image d'échantillon (Is),

$R_{s,k}$ est la vue reconstruite Rs,k pour l'image d'échantillon Is, sur la base d'une image supplémentaire Ik, et $Lp_{s,k}$ est une erreur de photo-consistance minimale par pixel entre l'image Is et la vue reconstruite Rs,k ; et dans lequel

à l'étape S51, une pluralité de cartes de profondeur (Ds hr, Ds mr, Ds lr) à différentes résolutions sont générées pour l'image d'échantillon (Is) de l'échantillon considéré, avec l'estimateur de profondeur (DE) ;

à l'étape S53, une vue reconstruite (Rs,k) pour l'image d'échantillon (Is) sur la base de l'image supplémentaire (Ik) est générée pour chaque image supplémentaire (Ik) et pour chaque carte de profondeur de ladite pluralité de cartes de profondeur ;

à l'étape S55, une valeur de la fonction de perte (L) pour l'échantillon (CS, PS1, PS2, PS3) considéré est calculée pour chaque carte de profondeur de ladite pluralité de cartes de profondeur ; et

à l'étape S60, les paramètres d'au moins l'estimateur de profondeur (DE) sont ajustés sur la base des valeurs respectives de la fonction de perte (L) calculées pour les échantillons respectifs et pour chaque carte de profondeur de ladite pluralité de cartes de profondeur.

**2.** Procédé de prédiction selon la revendication 1, dans lequel :

au cours de ladite étape de calcul ou d'acquisition du mouvement de caméra S52, le mouvement de caméra (Ms,k) est calculé à l'aide d'un estimateur de mouvement de caméra (CME) qui est un modèle entraînable sur la base de l'image d'échantillon (Is) et l'image supplémentaire (Ik) ; et

le procédé comprend, à ladite étape d'ajustement de paramètres S60, le fait d'ajuster en outre les paramètres de l'estimateur de mouvement de caméra (CME).

**3.** Procédé de prédiction selon l'une des revendications 1 et 2, dans lequel, la valeur de ladite fonction de perte (L) est calculée de manière à ne pas prendre en compte dans l'image d'échantillon (Is) les pixels représentant un objet mobile identifié dans la scène.

**4.** Procédé de prédiction selon l'une des revendications 1 à 3, dans lequel l'estimateur de profondeur (DE) et/ou l'estimateur de mouvement de caméra (CME) comprennent un réseau U-net.

**5.** Un ou plusieurs programmes informatiques **caractérisés en ce qu'**ils comprennent des instructions qui, lorsque les instructions sont exécutées par un ordinateur, amènent l'ordinateur à mettre en œuvre les étapes d'un procédé de prédiction selon l'une quelconque des revendications 1 à 4.

6. Support non transitoire lisible par ordinateur (111), sur lequel sont stockés un ou plusieurs programmes informatiques selon la revendication 5.

7. Système de prédiction (200) mis en œuvre par ordinateur pour prédire de manière itérative une carte de profondeur (Dj) à l'aide d'au moins un estimateur de profondeur (DE), l'estimateur de profondeur étant un réseau neuronal ; le système de prédiction (200) comprenant un ou plusieurs processeurs (112) et un support lisible par ordinateur (111) ; le support lisible par ordinateur (111) comprenant des instructions informatiques qui y sont stockées, les instructions, lorsqu'elles sont exécutées par les un ou plusieurs processeurs, amenant les un ou plusieurs processeurs à mettre en œuvre les étapes d'un procédé de prédiction selon l'une quelconque des revendications 1 à 4.

8. Machine mobile (10), par exemple un véhicule ou un robot, comprenant une caméra (121) unique et un système de prédiction mis en œuvre par ordinateur (200) selon la revendication 7, le système de prédiction mis en œuvre par ordinateur (200) étant configuré pour acquérir des images à partir de la caméra (121).

FIG.1

EP 4 012 653 B1

I_j

# FIG.2

D_j

# FIG.3

FIG.4

FIG.5

**FIG.6**

Acquire a new image Ij — S10

Calculate camera motion Mj-1,j — S20

Is camera motion Mj-1,j higher than minimun threshold
MinT and smaller than maximum threshold MaxT ? — S30

No

Yes

Constitute current sample.
Include one or more samples (PS1,PS2,PS3) from replay buffer — S40

For each sample (CS,PS1,PS2,PS3) do :

S51 — Generate depth map at differents resolutions
based on sample image Is

S52 — Calculate or acquire
camera motion(s) Ms,k for the sample

S53 — Generate reconstructed views Rs,k based on images Is, Ik,
camera motion(s) Ms,k and the depth map Ds

S54 — Acquire velocities Vs,k

S55 — Calculate loss

S56 — Next sample ?

— S50

No

Adjust parameters of the depth estimator DE and/or
the camera motion estimator CME — S60

Store current sample CS in replay buffer RB — S70

— S80

Calculate a depth map Dj and/or a camera motion Mj-1,j for
the current image Ij

FIG.7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. C. KUMAR** ; **S. M. BHANDARKAR** ; **M. PRASAD**. Monocular Depth Prediction Using Generative Adversarial Networks. *2018 IEEE/CVF Conference on Computer Vision and Pattern Recognition Workshops (CVPRW)*, 2018, 413-4138
- **YANG, DELONG** ; **ZHONG, XUNYU** ; **GU, DONGBING** ; **PENG, XIAFU** ; **U, HUOSHENG**. Unsupervised framework for depth estimation and camera motion prediction from video. *Neurocomputing*, 2019, vol. 385
- **CLEMENT GODARD** ; **MAC AODHA OISIN** ; **MICHAEL FIRMAN** ; **GABRIEL J. BROSTOW**. Digging into self-supervised monocular depth estimation. *IEEE International Conference on Computer Vision (ICCV)*, October 2019
- **TINGHUI ZHOU** ; **MATTHEW BROWN** ; **NOAH SNAVELY** ; **DAVID G. LOWE**. Unsupervised learning of depth and ego-motion from video. *Proceedings of the IEEE Conference on Computer Vision and Pattern Recognition*, 2017, 1851-1858
- U-net: Convolutional networks for biomedical image segmentation. **OLAF RONNEBERGER** ; **PHILIPP FISCHER** ; **THOMAS BROX**. International Conference on Medical image computing and computer-assisted intervention. Springer, 2015
- **VINCENT CASSER** ; **SOEREN PIRK** ; **REZA MAHJOURIAN** ; **ANELIA ANGELOVA**. Depth prediction without the sensors: Leveraging structure for unsupervised learning from monocular videos. *Proceedings of the AAAI Conference on Artificial Intelligence*, 2019, vol. 33, 8001-8008

- **YUHUA CHEN** ; **CORDELIA SCHMID** ; **CRISTIAN SMINCHISESCU**. Self-supervised learning with geometric constraints in monocular video: Connecting flow, depth, and camera. *IEEE International Conference on Computer Vision (ICCV)*, October 2019
- **GLENN JOCHER**. *YOLOV5 object detector. Code repository*, https://github.com/ultralytics/yolov5
- **ALEXEY BOCHKOVSKIY** ; **CHIEN-YAO WANG** ; **HONG-YUAN MARK LIAO**. YOLOv4: Optimal speed and accuracy of object detection. *arXiv preprint arXiv:2004.10934*, 2020
- **CLÉMENT GODARD** ; **OISIN MAC AODHA** ; **GABRIEL J BROSTOW**. Unsupervised monocular depth estimation with left-right consistency. *Proceedings of the IEEE Conference on Computer Vision and Pattern Recognition*, 2017, 270-279
- **SHUNKAI LI** ; **XIN WANG** ; **YINGDIAN CAO** ; **FEI XUE** ; **ZIKE YAN** ; **HONGBIN ZHA**. Self-supervised deep visual odometry with online adaptation. *Proceedings of the IEEE/CVF Conference on Computer Vision and Pattern Recognition*, 2020, 6339-6348
- **ZHENYU ZHANG** ; **STEPHANE LATHUILIERE** ; **ELISA RICCI** ; **NICU SEBE** ; **YAN YAN** ; **JIAN YANG**. Online depth learning against forgetting in monocular videos. *Proceedings of the IEEE/CVF Conference on Computer Vision and Pattern Recognition*, 2020, 4494-4503
- **NARAYANA, MANJUNATH** ; **HANSON, ALLEN** ; **LEARNED-MILLER, ERIK**. Coherent motion segmentation in moving camera videos using optical flow orientations. *Proceedings of the IEEE International Conference on Computer Vision*, 2013, 1577-1584